# EUROPEAN PATENT APPLICATION

(11) **EP 2 650 154 A1**
(43) Date of publication of application: **16.10.2013**
(21) Application number: 11847350.3
(22) Date of filing: 22.09.2011
(51) Int. Cl.: B60H 1/22, H01C 7/02

(54) **HEAT MEDIUM HEATING DEVICE**

(30) Priority: 06.12.2010 JP 2010271652
(71) Applicant: Mitsubishi Heavy Industries, Ltd., Tokyo 108-8215 (JP)
(72) Inventor: WATANABE, Yasunori, Tokyo 108-8215 (JP); CHUMAN, Yasuharu, Tokyo 108-8215 (JP); KUGA, Kazunori, Tokyo 108-8215 (JP); KOMINAMI, Satosi, Tokyo 1088215 (JP)
(74) Representative: Henkel, Breuer & Partner
(86) International application number: PCT/JP2011/005341
(87) International publication number: WO 2012/077266

(57) **Abstract**

An object is to provide a heat medium heating device capable of improving adherence between a PTC element and an electrode plate and, furthermore, adherence between a PTC heater and a heat-medium flow-path forming member, while avoiding an increase in cost. A heat medium heating device 10 includes an inner case main body 21 having a flow path of a heat medium formed inside, an outer case main body 31 arranged on an outer peripheral side of the inner case main body 21 and having a flow path of the heat medium formed outside, and a PTC heater 40 held as being interposed between the inner case main body 21 and the outer case main body 31. The inner case main body 21 and the outer case main body 31 each may have a circular outer shape or a rectangular outer shape. Also, the inner case main body 21 and the outer case main body 31 are preferably provided with fins 24 and 34, respectively, facing the flow path of the heat medium.

## Description

### Technical Field

The present invention relates to a device that heats a heat medium by using a PTC (Positive Temperature Coefficient) heater.

### Background Art

**A** heat medium heating device that heats a medium to be heated has been conventionally known, which uses a PTC heater having a positive character thermister element (PTC element) as a heating element.

The PTC heater has a characteristic such that current consumption is decreased when the temperature of the heater increases and is then stabilized at a low value when the temperature reaches a certain temperature in a saturated region. By using this characteristic, power consumption can be saved. Also, an abnormal increase in temperature of a heating part can be advantageously prevented. With these features, the PTC heater is used in many fields of technology. For example, as indicated in Patent Document 1, it is known that the PTC heater is used as an auxiliary heater for heating an automobile.

The PTC heater generally has a laminated structure in which a PTC element in the shape of a flat plate is used as a heating element and an electrode plate and an insulating layer are sequentially laminated on each of front and back surfaces across this heating element.

The electrode plate is to supply power to the PTC element, and has electrical conductivity and thermal conductivity.

The insulating layer is provided to minimize thermal resistance between the PTC element and the electrode plate, and a member forming a flow path of a heat medium (a heat-medium flow-path forming member) and to ensure electrical insulation. The insulating layer is configured of an insulating material having thermal conductivity such as alumina. As the insulating layer, an insulating layer further having compressibility may be used. This compressible insulating layer improves adherence to the heat-medium flow-path forming member of the PTC heater by using compressibility when the PTC heater is assembled to the heating device, and is configured of an insulating sheet having thermal conductivity such as a silicon sheet.

Not only as an auxiliary heater for automobile, the PTC heater desirably also has high heating efficiency. To obtain high heating efficiency, there are several points required for the PTC heater. Among these points, an object described in Patent Document 1 is to improve adherence of a strip conductor (an electrode plate) to the PTC element. This is because, if adherence of the electrode plate to the PTC element is degraded, heat generated from the PTC element is relatively incompletely transferred to the outside. In Patent Document 1, a wedge element is provided to increase this adherence. Patent Document 1 describes that, with the provision of the wedge element, the strip conductor is pressed onto the PTC element as uniformly as possible. As a matter of course, this adherence is desired not only for a relation between the PTC element and the strip electrode but also for a relation between the PTC heater including the PTC element and the heat-medium flow-path forming member.

### Citation List

### Patent Document

Patent Document 1: Japanese Patent Laid-Open No. 2008-109137

### Summary of the Invention

### Technical Problems to be Solved by the Invention

However, in the proposal of Patent Document 1, the wedge element is required for each PTC heater unit. In addition of the cost of the wedge element itself, the cost of operation of assembling the wedge element to each PTC heater unit is added, thereby increasing production cost.

Therefore, an object of the present invention is to provide a heat medium heating device capable of improving adherence between a PTC element and an electrode plate and, furthermore, adherence between a PTC heater and a heat-medium flow-path forming member, while avoiding an increase in cost.

### Solution to the Problems

The inventors proposes a structure of an unprecedented novel heat medium heating device in which the heat-medium flow-path forming member is configured of an inner case and an outer case and a PTC heater is interposed between the inner case and the outer case. In this structure, after the PTC heater is interposed between the inner case and the outer case, the diameter of the inner case is enlarged, that is, a so-called "pipe enlargement" is performed, thereby exerting a pressure between the inner case and the PTC heater and between the PTC heater and the outer case. Therefore, adherence between the inner case and the PTC heater and between the PTC heater and the outer case can be sufficiently ensured. This adherence also applies among a PTC element, an electrode plate, and an insulating layer.

As described above, the heat medium heating device of the present invention includes an inner case having a flow path of a heat medium formed inside, an outer case arranged on an outer peripheral side of the inner case and having a flow path of the heat medium formed outside, and a PTC heater held as being interposed between the inner case and the outer case.

In the heat medium heating device of the present invention, the inner case and the outer case each having a circular outer shape can be used. If the circular inner case (and outer case) is used, pipe enlargement can be easily performed, and therefore it is easy to manufacture the heat medium heating device. Also, the flow path of the heat medium is smooth, and therefore a pressure loss of the heat medium flowing through the inner case and the outer case can be decreased.

Also, in the heat medium heating device of the present invention, the inner case and the outer case each having a rectangular outer shape can be used. If the rectangular inner case and outer case are used, the conventional PTC element in the shape of a flat plate for general purpose use can be used.

In the heat medium heating device of the present invention, each of the inner case and the outer case is preferably provided with a fin facing the flow path of the heat medium. This is to improve heat exchange efficiency between the PTC heater and the heat medium.

In the heat medium heating device of the present invention, when a control unit controlling ON and OFF of the PTC heater is provided, the control unit is preferably arranged so that a heating component (for example, a FET (Field effect transistor)) included in the control unit is in contact with the inner case or the outer case. The heat medium flowing through the inside of the inner case or the outer case is normally in a temperature state lower than that of the heating component such as a FET. Therefore, with the flow of the heat medium, the heating component is forcibly cooled. In this case, the heat medium heating device and the control unit are more preferably positioned on an upstream side of the flow path of the heat medium formed inside the inner case or the outer case.

### Advantageous Effects of Invention

According to the heat medium heating device of the present invention, after the PTC heater is arranged between the inner case and the outer case, pipe enlargement is performed on the inner case, thereby exerting a pressure between the inner case and the PTC heater and between the PTC heater and the outer case. Therefore, the heat medium heating device according to the present invention, adherence between the inner case and the PTC heater and between the PTC heater and the outer case can be sufficiently ensured. Also, according to the present invention, adherence can be ensured by performing an operation of pipe enlargement even without providing a new member, and thereby an increase in cost can be avoided.

### Brief Description of Drawings

[FIG. 1] FIG. 1 is an I-I arrow view of FIG. 2, showing a heat medium heating device according to a first embodiment of the present invention.
[FIG. 2] FIG. 2 is a II-II arrow view of FIG. 1, depicting the heat medium heating device according to the first embodiment of the present invention.
[FIG. 3] FIG. 3 is a longitudinal sectional view of main parts of a heat medium heating device according to a modification example of the first embodiment of the present invention.
[FIG. 4] FIG. 4 is a lateral sectional view of main parts of a heater unit according to another modification example of the first embodiment of the present invention.
[FIG. 5] FIG. 5 is a front view of a heater unit according to a second embodiment of the present invention.
[FIG. 6] FIG. 6 is a III-III arrow view of FIG. 5, showing the heater unit according to the second embodiment of the present invention.
[FIG. 7] FIG. 7 is a block diagram of a schematic structure of an air conditioning device for vehicle using a heat medium heating device.

### Description of Embodiments

The present invention is described in detail below based on embodiments shown in the accompanying drawings.

### [First embodiment]

A heat medium heating device 10 according to a first embodiment is used in, for example, an air conditioning device for vehicle 1, which will be described further below. In this case, a heat medium heated by the heat medium heating device 10 is supplied to a radiator 6, and serves as a heat source for warming air.

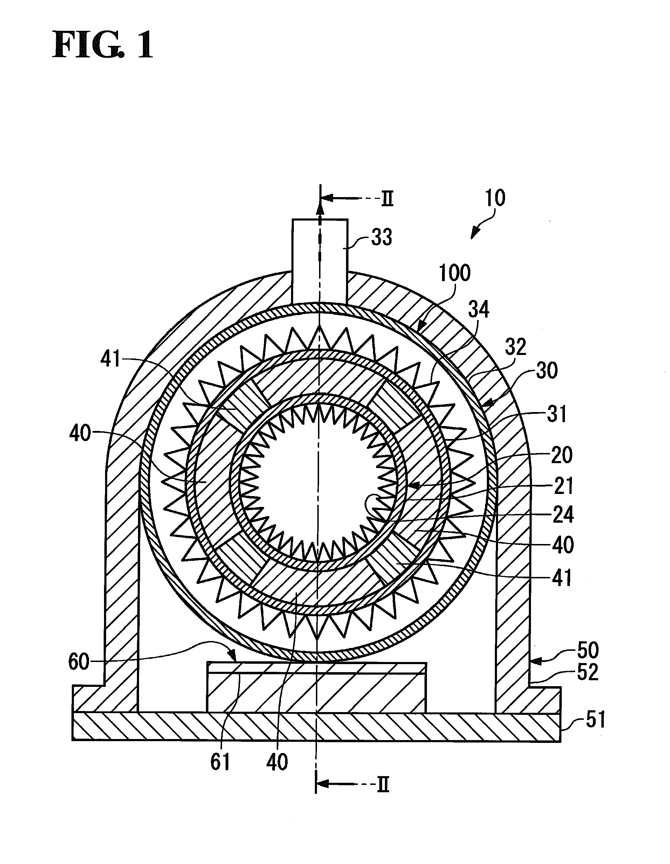

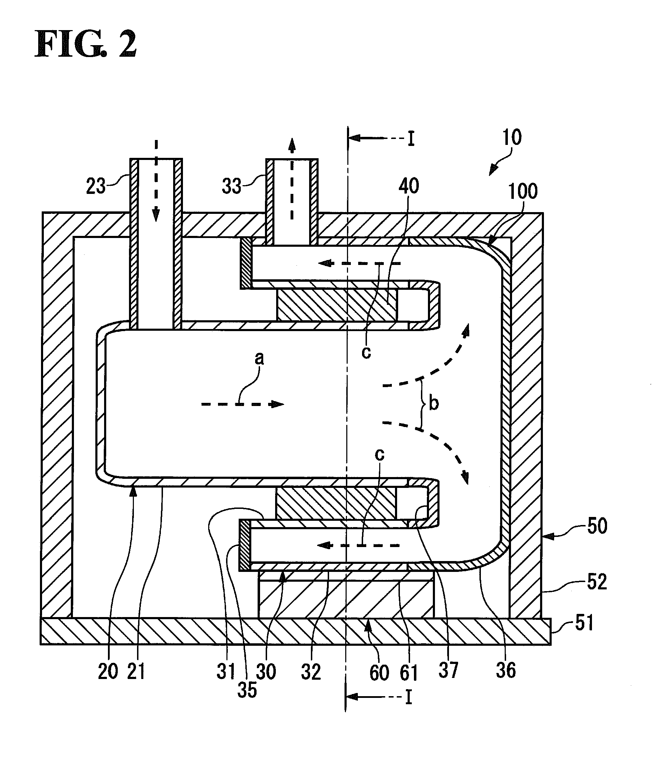

The heat medium heating device 10 includes, as shown in FIG. 1 and FIG. 2, an inner case unit 20 and an outer case unit 30 arranged around the inner case unit 20. Between the inner case unit 20 and the outer case unit 30, PTC heaters 40 are interposed and held to configure a heater unit 100 together with the inner case unit 20 and the outer case unit 30. A heat medium to be introduced into the heat medium heating device 10 sequentially flows through the inner case unit 20 and then the outer case unit 30 while being heated by the PTC heaters 40, and the heat medium is then discharged from the heat medium heating device 10.

### <Inner Case Unit 20>

The inner case unit 20 includes a cylindrical inner case main body 21 having one end in an axial direction closed and the other end open and an introduction tube 23 connected to an one end side of the inner case main body 21. Inside the inner case main body 21, a flow path of the heat medium is formed. The introduction tube 23 is connected to a heat medium circulating circuit 11 of the air conditioning device for vehicle 1. The heat medium is introduced to the inside of the inner case main body 21 via the introduction tube 23. The inner case main body 21 is provided with fins 24 (omitted in FIG. 2) in contact with its inner peripheral surface. The fins 24 are to efficiently transmit heat generated by the PTC heaters 40 to the heat medium.

The inner case main body 21, the introduction tube 23, and the fins 24 are made of an aluminum alloy, and a junction between the inner case main body 21 and the introduction tube 23 and a junction between the inner case main body 21 and the fins 24 can be made by brazing. The same applies to the material and junction regarding the outer case unit 30.

### <Outer Case Unit 30>

The outer case unit 30 includes a cylindrical outer case main body 31 having both ends in the axial direction open, an outer wall tube 32 arranged outside the outer case main body 31 so as to surround the outer case main body 31, a discharge tube 33 connected to the outer wall tube 32, a ring-shaped first sealing body 35 sealing one end of the outer case main body 31 and one end of the outer wall tube 32, and a cup-shaped second sealing body 36 sealing other ends of the outer wall tube 32. The open ends of the outer case main body 31 and the open end of the inner case main body 21 are connected together with a ring- and gutter-shaped third sealing body 37. In this manner, the ends in the axial direction are sealed with the first sealing body 35 to the third sealing body 37, and a gap between outside of the outer case main body 31 and the outer wall tube 32 forms a flow path of the heat medium. In this flow path, fins 34 are arranged. The fins 34 are provided in contact with an outer peripheral surface of the outer case main body 31. This flow path links to the flow path of the heat medium of the inner case unit 20. The discharge tube 33 is connected to the heat medium circulating circuit 11 of the air conditioning device for vehicle 1. The heat medium flowing through the flow path of the inner case unit 20 and the flow path of the outer case unit 30 is supplied via the discharge tube 33 to the radiator 6 of the heat medium circulating circuit 11.

Note that the element linking the inner case main body 21 and the outer case main body 31 is not restricted to those described above (the first sealing body 35 to the third sealing member 37) as long as a flow path of the heat medium is formed inside the inner case main body 21 and a flow path of the heat medium is formed outside the outer case main body 31.

### <PTC Heaters 40>

The PTC heaters 40 are held as being interposed between the inner case main body 21 and the outer case main body 31. Thus, the PTC heaters 40 each have a cross section in an arc shape. In detail, as described further below, in the course of manufacturing the heater unit 100, after PTC heaters 40 are arranged between the inner case main body 21 and the outer case main body 31, a pipe enlargement operation is performed on the inner case main body 21. In accordance with this pipe enlargement, the PTC heaters 40 are rigidly adhered between the inner case main body 21 and the outer case main body 31.

Each PTC heater 40 can adopt a known structure. That is, it is possible to use the PTC heater 40 at least including a PTC element made of ceramics having lead zirconate titanate (PZT) as a main component, electrode plates arranged on its front and back, and an insulating layer (for example, made of alumina) arranged so as to be in contact with the outside of each electrode plate. Also, in addition to the PTC element, electrode plates, and the insulating layers, it is also possible to provide a compressive insulating layer configured of an insulating sheet having thermal conductivity such as a silicon sheet described above. These structures are known and therefore are not shown in the drawings.

Here, an example is shown in which four PTC heaters 40 are spaced apart from each adjacent PTC heater 40, and each gap therebetween has a heat conductive gel 41 arranged therein. This is merely an example. Four arc-shaped PTC heaters 40 having a central angle of 90 degrees can be prepared and arranged without a gap with each adjacent PTC heater 40, or an integrally-formed ring-shaped PTC heater 40 can be used.

To the PTC element, which is a heating element of each PTC heater 40, a high voltage is applied from a control board 61, which will be described further below, via the electrode plate. With this, the PTC element emits heat and discharges heat from both surfaces. This heat is transferred via the electrode plate and the insulating layer adhered to the PTC element to the inner case main body 21 and the outer case main body 31 for heating the heat medium and increasing its temperature.

### <Entire Structure>

Thus integrated inner case unit 20, outer case unit 30, and PTC heaters 40 (the heater unit 100) is held by a housing 50. The housing 50 is comprised of a base 51 and a cover 52. On the flat-shaped base 51, a control board accommodation box 60 is arranged, on which the heater unit 100 is arranged. The cover 52 covering the heater unit 100 from above includes an arc-shaped inner peripheral surface along and in contact with the outer wall tube 32, and has a ceiling in which holes are formed, through which the introduction tube 23 and the discharge tube 33 penetrate.

In the control board accommodation box 60, the control board 61 for controlling ON and OFF of the heat medium heating device 10, in particular, the PTC heaters 40. This control board 61 is provided with a heating component such as a FET (Field effect transistor). The control board 61 is arranged so that this heating component such as a FET is in contact with an upper surface of the control board accommodation box 60. Therefore, the heating component is forcibly cooled with a flow of the heat medium.

### <General Outline of Processes of Producing Heater Unit>

The heater unit 100 described above is fabricated generally through the following processes.

With the outer case main body 31 arranged around the inner case main body 21, the PTC heaters 40 are inserted between the inner case main body 21 and the outer case main body 31. After the PTC heaters 40 are positioned in an axial direction and a circumferential direction, a punch for pipe enlargement is inserted inside the inner case main body 21. As a result, the inner case main body 21 is spread in a direction of enlarging the diameter to increase a pressure between the inner case main body 21 and the PTC heaters 40 and a pressure between the PTC heaters 40 and the outer case main body 31, thereby improving adherence.

When the pipe enlargement operation on the inner case main body 21 is completed, the fins 24 are inserted at predetermined positions of the inner case main body 21, and the fins 34 are inserted at predetermined positions of the outer case main body 31. Also, the introduction tube 23, the discharge tube 33, the outer wall tube 32, the first sealing body 35, the second sealing body 36, and the third sealing body 37 are arranged at predetermined positions to fabricate an assembly of the heater unit 100. At the time of assembling these, a brazing material is provided to intervene in a junction point. Also, the gel 41 is inserted during this assembling.

Thereafter, by performing brazing with a series of processes of heating and cooling in a heating furnace, the heater unit 100 is fabricated.

### <Flow of Heat Medium in Heat Medium Heating Device 10>

Thus obtained heat medium heating device 10 operates in a manner as described below.

The heat medium introduced from the introduction tube 23 flows inside the inner case main body 21 from one end to the other in the axial direction (an arrow a of FIG. 2). This heat medium changes its direction to the diameter direction on the other end side of the inner case unit 20 by the second sealing body 36 (arrows b of FIG. 2), and then the direction is turned on an outer peripheral side of the second sealing body 36. This heat medium proceeds the flow path formed between the outer case main body 31 and the outer wall tube 32(arrows c of FIG. 2), and is discharged via the discharge tube 33 to the heat medium circulating circuit 11.

While flowing through the inner case main body 21, the heat medium is heated by heat transfer mainly from the back surface (the inner peripheral surface) of the PTC heaters 40. Furthermore, while flowing through the outer case main body 31, the heat medium is heated by heat transfer mainly from the front surface (the outer peripheral surface) of the PTC heaters 40.

### <Effects of Heat Medium Heating Device 10>

As described above, the heat medium heating device 10 adopts the form in which the PTC heaters 40 are held as being interposed between the inner case main body 21 and the outer case main body 31. Thus, in the course of manufacture, pipe enlargement can be performed on the inner case main body 21. Therefore, the PTC heaters 40 can be held with high adherence to the inner case main body 21 and the outer case main body 31, and thus the heat medium heating device 10 has high heating efficiency.

Also, in the heat medium heating device 10, the flow path of the heat medium formed inside the inner case main body 21 and the flow path of the heat medium formed between the outside of the outer case main body 31 and the outer wall tube 32 are closed in the circumferential direction. Therefore, the heat medium heating device 10 has a structure in which heat is less prone to escape.

In the heat medium heating device 10, the respective members configuring the heater unit 100 are joined by brazing, and fasteners such as bolts and screws are not used. Normally, each of the members configuring the heater unit 100 is made of an aluminum alloy, and fasteners are made of an iron-based material different from the above. Therefore, if the heat medium leaks to be in contact with the fasteners, due to a difference in electrical potential because of different materials, the fasteners may corrode. By contrast, according to the present embodiment in which fasteners are not used, such corrosion can be eliminated.

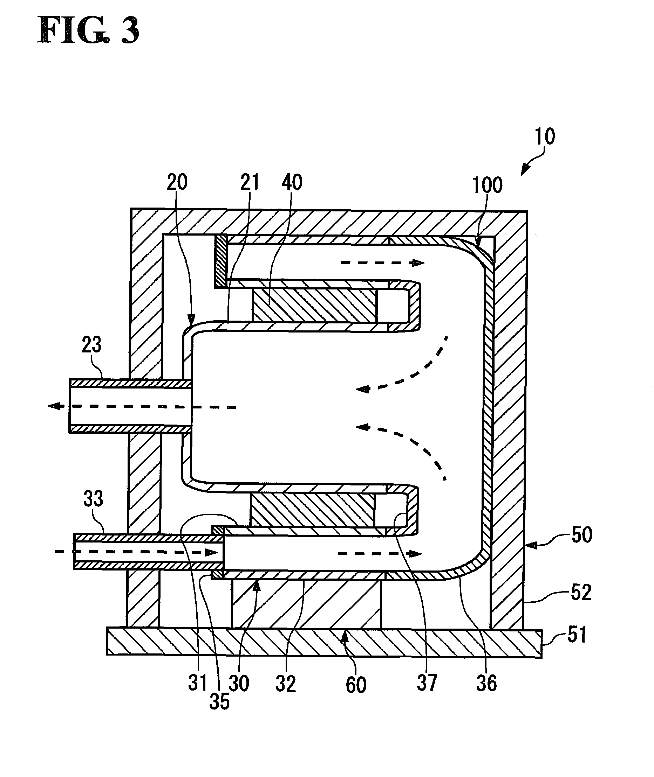

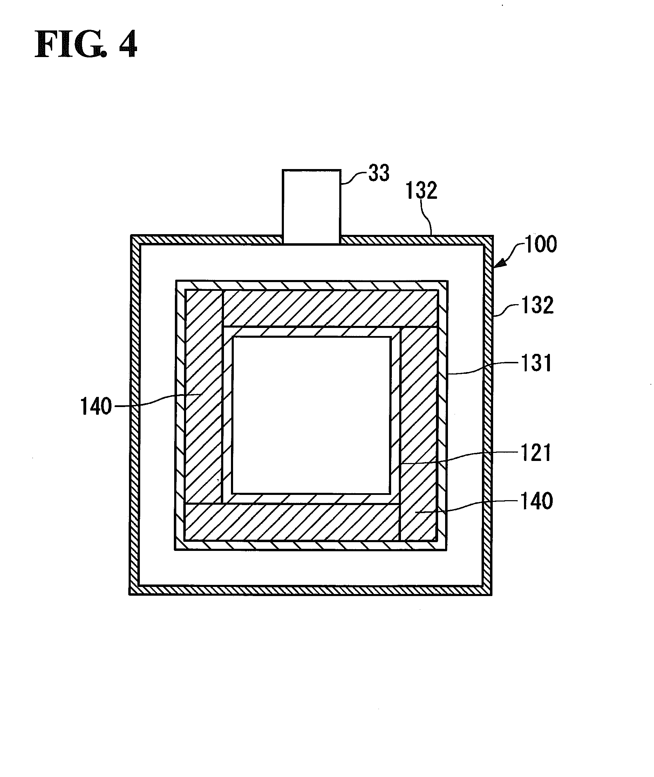

While the heat medium flows from the inner case unit 20 toward the outer case unit 30 in the heat medium heating device 10 described above, the heat medium can be made to flow from the outer case unit 30 toward the inner case unit 20 as shown in FIG. 3. With such configuration, the control board 61 can be arranged on an upstream side of the flow of the heat medium (equal to or lower than one half, preferably one thirds, of the entire flow path length). Thus, with a heat medium at a lower temperature, the heating component in the control board 61 can be efficiently cooled. Note that components in FIG. 3 identical to those in FIG. 1 and FIG. 2 are provided with the same reference numeral. The same applies to FIG. 4.

Still further, while the outer shape of each of the inner case main body 21, the outer case main body 31, and the outer wall tube 32 is a circular shape in the heat medium heating device 10 described above, an inner case main body 121, an outer case main body 131, and an outer wall tube 132 each having a rectangular outer shape can be used in the present invention as shown in FIG. 4. In this case, in place of the arc-shaped PTC heaters 40, PTC heaters 40 in the shape of a flat plate for general purpose use can be advantageously used.

### [Second Embodiment]

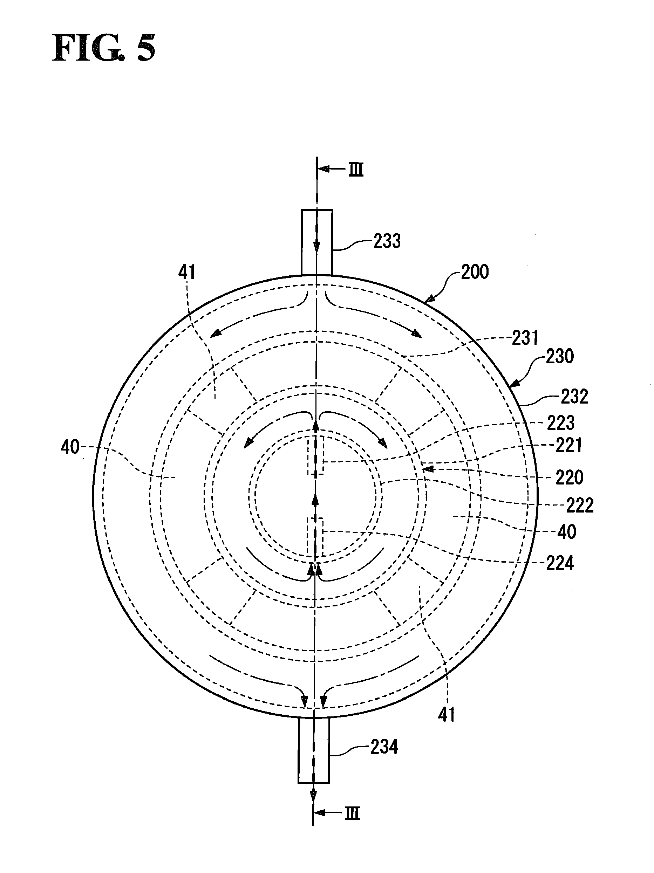

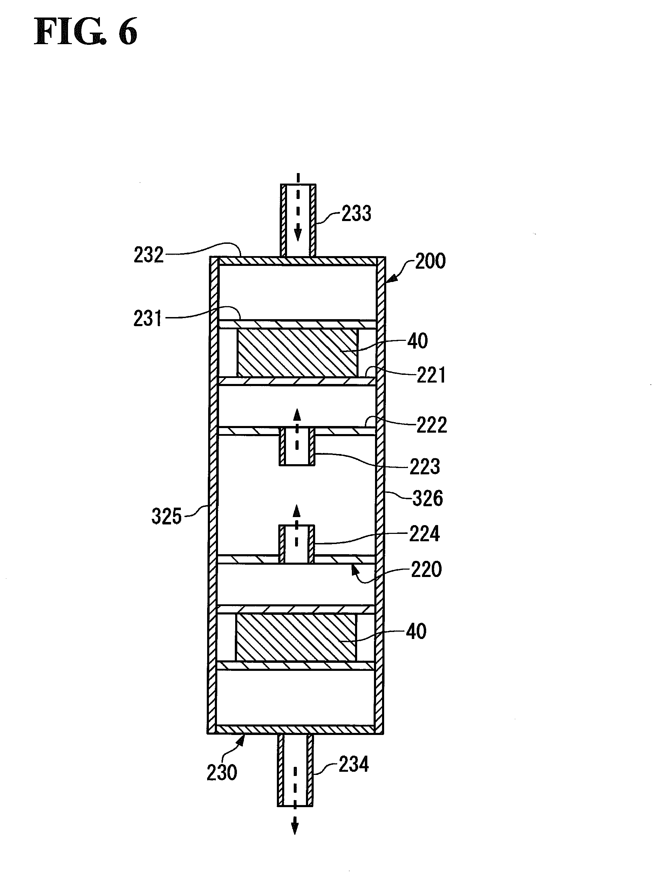

Next, a second embodiment of the present invention is described with reference to FIG. 5 and FIG. 6.

A heater unit 200 according to the second embodiment is different from the heater unit 100 according to the first embodiment in that the heat medium flows exclusively in the circumferential direction. In the following, this different point is mainly described.

The heater unit 200 includes an inner case unit 220 and an outer case unit 230 arranged around the inner case unit 220. The PTC heaters 40 are held as being interposed Between the inner case unit 220 and the outer case unit 230.

### <Inner Case Unit 220 and Outer Case Unit 230>

To the inner case unit 220, a cylindrical inner case main body 221 having both ends in an axial direction open, an inner wall tube 222 arranged inside the inner case main body 221 so as to be surrounded by the inner case main body 221, and an introduction tube 223 and a discharge tube 224 connected to the inner wall tube 222 are connected. The introduction tube 223 and the discharge tube 224 are arranged in a straight line in a diameter direction.

To the outer case unit 230, a cylindrical outer case main body 231 having both ends in the axial direction open, an outer wall tube 232 arranged outside the outer case main body 231 so as to surround the outer case main body 231, and an introduction tube 233 and a discharge tube 234 connected to the outer wall tube 232 are connected. The introduction tube 233 and the discharge tube 234 are arranged in a straight line in the diameter direction. The introduction tube 223 of the inner case unit 220 and the introduction tube 233 of the outer case unit 230 are branched from the same flow path (the heat medium circulating circuit 11). The discharge tube 224 of the inner case unit 220 and the discharge tube 234 of the outer case unit 230 are merged into the same flow path (the heat medium circulating circuit 11).

The inner case unit 220 and the outer case unit 230 have both open ends in the axial direction closed by a first sealing body 325 and a second sealing body 326 each in a disk shape.

Note that it goes without saying that fins can be provided to the inner case unit 220 and the outer case unit 230. The fins for use in this case extend in the axial direction of the inner case unit 220 and the outer case unit 230. When fins are provided to the inner case unit 220, the plurality of fins can be radially arranged on an inner peripheral surface of the inner case main body 221. When fins are provided to the outer case unit 230, the plurality of fins can be radially arranged on an outer peripheral surface of the outer case main body 231.

The heat medium introduced from the introduction tube 223 of the inner case unit 220 collides with an inner wall of the inner case main body 221 to be branched to the left and the right to flow in a circumferential direction, and these flows are merged near the discharge tube 224 to be supplied to the outside. Also, the heat medium introduced from the introduction tube 233 of the outer case unit 230 collides with an outer wall of the outer case main body 231 to be branched to the left and the right to flow in the circumferential direction, and these flows are merged near the discharge tube 234 to be supplied to the outside.

The heater unit 200 described above also achieves effects similar to those of the heater unit 100 according to the first embodiment.

Also, while the heater unit 200 requires the inner wall tube 222 and also the inner case unit 220 and the outer case unit 230 require the introduction tubes 223 and 233 and the discharge tubes 224 and 234, respectively, compared with the heater unit 100, a member for sealing in the axial direction is advantageously eliminated.

### <Application Example to Air Conditioning Device for Vehicle>

As an application example of the heat medium heating device according to the embodiments described above, the air conditioning device for vehicle 1, is described.

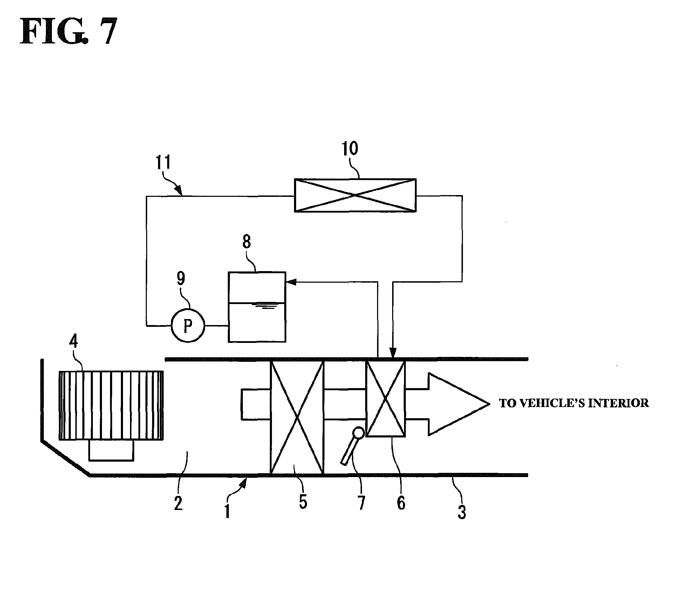

As shown in FIG. 7, the air conditioning device for vehicle 1 includes a casing 3 for taking in outside air or vehicle indoor air for temperature control and forming an air flow path 2 for guiding the controlled air to the vehicle's interior.

Inside the casing 3, a blower 4 that sequentially draws in outside air or vehicle indoor air from an upstream side to a downstream side of the air flow path 2 to increase pressure and pumps the air to the downstream side, a cooler 5 that cools the air pumped by the blower 4, the radiator 6 that heats the air cooled as passing through the cooler 5, and an air mix damper 7 that adjusts a ratio between the amount of air passing through the radiator 6 and the amount of air flowing by bypassing the radiator 6 to adjust the temperature of air mixed on its downstream side.

The downstream side of the casing 3 is connected to a plurality of air holes not shown, from which the temperature-controlled air is blown into the vehicle's interior via a blowing mode switching damper and a duct, which are not shown.

The cooler 5 configures a coolant circuit together with a compressor, a condenser, and an expansion valve not shown to evaporate a coolant heat-insulated and expanded by the expansion valve, thereby cooling the air passing therethrough.

The radiator 6 configures the heat medium circulating circuit 11 together with a tank 8, a pump 9, and the heat medium heating device 10. With the heat medium heated by the heat medium heating device 10 being circulated via the pump 9, the temperature of the air passing therethrough is increased.

According to the air conditioning device for vehicle 1, the device is configured so that the heat medium heated by the heat medium heating device (the heater unit) described above can be circulated in the radiator 6, this heat medium can be supplied to the radiator 6 and can be used as a heat source for increasing the temperature of the air. Therefore, an air conditioning device for vehicle can be obtained that is suitable for use as an air conditioning device of an electric car or the like where an engine using cooling water is not mounted. Also, by applying the device of the present invention to an air conditioning device for a vehicle where an engine is mounted and its cooling water is used as a heat source for increasing the temperature of the air, the low-temperature cooling water can be quickly heated at the time of startup to be circulated in the radiator. Thus, air-conditioning startup performance at the time of starting the air conditioning device can be improved.

While the present invention has been described based on the embodiments in which the outer shape of each of the inner case unit 20 and the outer case unit 30 is a circular shape or a rectangular shape, an oval shape (except a circular shape) or a polygonal shape (except a rectangle) can be adopted.

Also, the air conditioning device for vehicle is merely an example of the use purpose for such device, and the present invention can be applied to another use purpose.

Other than the above, the structures described in the embodiments can be selectively adopted or omitted and can be changed to another structure without deviating from the gist of the present invention.

### Reference Signs List

1 ... air conditioning device for vehicle
10 ... heat medium heating device
100, 200 ... heater unit
20, 220 ... inner case unit, 21, 221 ... inner case main body (inner case), 222 ... inner wall tube, 23, 223 ... introduction tube, 24 ... (inner case side) fin, 224 ... discharge tube,
30, 230 ... outer case unit, 31, 231 ... outer case main body (outer case), 32, 232 ... outer wall tube, 233 ... introduction tube, 33, 234 ... discharge tube, 34 ... (outer case side) fin, 35, 325 ... first sealing body, 36, 326 ... second sealing body, 37 ... third sealing body
40 ... PTC heater, 41 ... gel
50 ... housing, 51 ... base, 52 ... cover, 60 ... control board accommodation box, 61 ... control board

## Claims

1. A heat medium heating device comprising:
an inner case having a flow path of a heat medium formed inside;
an outer case arranged on an outer peripheral side of the inner case and having a flow path of the heat medium formed outside; and
a PTC heater held as being interposed between the inner case and the outer case.

2. The heat medium heating device according to claim 1, wherein
the inner case and the outer case each have a circular outer shape.

3. The heat medium heating device according to claim 1, wherein
the inner case and the outer case each have a rectangular outer shape.

4. The heat medium heating device according to claim 1, wherein
each of the inner case and the outer case is provided with a fin facing the flow path of the heat medium.

5. The heat medium heating device according to claim 2, wherein
each of the inner case and the outer case is provided with a fin facing the flow path of the heat medium.

6. The heat medium heating device according to claim 3, wherein
each of the inner case and the outer case is provided with a fin facing the flow path of the heat medium.

7. The heat medium heating device according to claim 1, comprising
a control unit controlling ON and OFF of the PTC heater,
the control unit being arranged on an upstream side of the flow path of the heat medium formed by the inner case and the outer case.

8. The heat medium heating device according to claim 2, comprising
a control unit controlling ON and OFF of the PTC heater,
the control unit being arranged on an upstream side of the flow path of the heat medium formed by the inner case and the outer case.

9. The heat medium heating device according to claim 3, comprising
a control unit controlling ON and OFF of the PTC heater,
the control unit being arranged on an upstream side of the flow path of the heat medium formed by the inner case and the outer case.

10. The heat medium heating device according to claim 4, comprising
a control unit controlling ON and OFF of the PTC heater,
the control unit being arranged on an upstream side of the flow path of the heat medium formed by the inner case and the outer case.
